# EUROPEAN PATENT APPLICATION

(11) **EP 1 375 614 A1**
(43) Date of publication of application: **02.01.2004**
(21) Application number: 02707154.7
(22) Date of filing: 26.03.2002
(51) Int. Cl.: C09D 175/16, C09D 5/00, C09D 4/00, C08J 7/18, C08G 18/67, C08F 20/36, B32B 27/30, B32B 15/08, B05D 7/24

(54) **PROCESS FOR COATING WITH RADIATION-CURABLE RESIN COMPOSITION AND LAMINATES**

(30) Priority: 28.03.2001 JP 2001091895; 28.03.2001 JP 2001091897; 28.03.2001 JP 2001091898
(71) Applicant: MITSUBISHI CHEMICAL CORPORATION, Chiyoda-ku, Tokyo 100-0005 (JP); The Nippon Synthetic Chemical Industry Co., Ltd., Osaka-shi, Osaka 531-6029 (JP)
(72) Inventor: MATSUNAMI, H., THE NIPPON SYNTH. CHEM. IND. CO.LTD, Ibaraki-shi, Osaka 567-0052 (JP); SUGITA, Y., THE NIPPON SYNT. CHEM. IND. CO. LTD, Ibaraki-shi, Osaka 567-0052 (JP); AKIYAMA, M., THE NIPPON SYNTH. CHEM. IND. CO. LTD, Ibaraki-shi, Osaka 567-0052 (JP)
(74) Representative: Vollnhals, Aurel
(86) International application number: PCT/JP2002/002884
(87) International publication number: WO 2002/079335

(57) **Abstract**

The present invention relates to a process for coating a polyolefin or metal substrate by coating a polyolefin or metal substrate with a composition containing urethane (meth)acrylic resin [A] obtained by reacting a diisocyanate trimer (a1) and (meth)acrylate containing a hydroxyl group (a2) and exposing radiation to cure the coated surface, in which the composition containing urethane (meth)acrylic resin [A] contains a compound having a carboxyl group. Also, the present invention relates to a laminate having a layer structure of a top coat layer, a layer of a composition containing urethane (meth)acrylic resin [A], obtained by reacting a diisocyanate trimer (a1) and (meth)acrylate containing a hydroxyl group (a2), and a polyolefin layer.

## Description

### TECHNICAL FIELD

The present invention relates to a process for coating a polyolefin or metal substrate with a radiation curable resin composition containing urethane (meth)acrylic resin and to a laminate.

In the present specification, (meth)acrylate refers to acrylate and/or methacrylate and (meth)acrylic acid refers to acrylic acid and/or methacrylic acid and (meth)acryloyl refers to acryloyl and methacryloyl.

### BACKGROUND ART

Conventionally, radiation curable resin composition has been widely used in coatings and adhesives for substrates, as curing is completed by an extremely short period of radiation exposure.

For example, JP-A-6-184498 discloses a curable adhesive composition comprising at least one member selected from the group consisting of (meth)acrylic acid and (meth)acrylate containing a carboxyl group, and polyurethane poly(meth)acrylate. The curable adhesive composition exhibits adhesive strength to film by electron beam curing, and is used as an adhesive for laminates.

Also, JP-A-6-279706 discloses a coating composition comprising chlorinated polyolefin, a monomer mixture comprising multifunctional monomers having at least three (meth)acryloyl oxy groups within one molecule and one to two functional monomers having one to two (meth)acryloyl oxy groups within one molecule, an acrylic copolymer and a photo polymerization initiator, as an anchor coating for forming metal deposition and a top coat on substrates of molded articles of resin such as polyethylene and polypropylene.

However, conventionally known radiation curable resin compositions having urethane (meth)acrylic resin as the main component have some adhesion to plastic material having polarity, but do not have sufficient adhesion to nonpolar plastic material such as polyolefin, metal and glass. Therefore, the conventional radiation curable resin composition is limited in use in the field of metalizing treatment, in which metal deposition to a polyolefin molded article is conducted, which is increasingly used in the market in recent years.

As a solution for the above, a coating which has adhesion to both polyolefin and metal is necessary and the above problems are solved by conducting metal deposition after applying the coating to a polyolefin molded article. However, a radiation curable resin composition having such properties is not yet known and the development thereof is desired.

### DISCLOSURE OF INVENTION

The present invention relates to a process for coating a polyolefin or metal substrate which comprises coating a polyolefin or metal substrate with a composition containing urethane (meth)acrylic resin [A], obtained by reacting a diisocyanate trimer (a1) and (meth)acrylate containing a hydroxyl group (a2), and exposing radiation to cure the coated surface, wherein the composition containing urethane (meth)acrylic resin [A] contains a compound having a carboxyl group.

The urethane (meth)acrylic resin [A] preferably has a carboxyl group.

The urethane (meth)acrylic resin [A] is preferably urethane (meth)acrylic resin containing a carboxyl group, obtained by reacting a diisocyanate trimer (a1), an acrylate containing a hydroxyl group (a2) and a diol containing a carboxyl group (a3).

The compound having a carboxyl group is preferably at least one member selected from the group consisting of a Michael addition product of (meth)acrylic acid (b1) and 2-(meth)acryloyl oxyalkyl dicarboxylic monoester (b2).

The softening point of cured coating of the composition containing urethane (meth)acrylic resin [A] is preferably 20° to 80°C.

The composition containing urethane (meth)acrylic resin [A] is preferably a composition containing alicyclic acrylate (b3).

Also, the present invention relates to a laminate having a layer structure of a top coat layer, a layer of a composition containing urethane (meth)acrylic resin [A] obtained by reacting a diisocyanate trimer (a1) and (meth)acrylate containing a hydroxyl group (a2), and a polyolefin layer.

In the laminate, the composition containing urethane (meth)acrylic resin [A] preferably contains a compound having a carboxyl group.

In the laminate, the urethane (meth)acrylic resin [A] preferably has a carboxyl group.

In the laminate, the urethane (meth)acrylic resin [A] is preferably urethane (meth)acrylic resin containing a carboxyl group obtained by reacting a diisocyanate trimer (a1), (meth)acrylate containing a hydroxyl group (a2) and a diol containing a carboxyl group (a3) .

In the laminate, the compound having a carboxyl group is preferably at least one member selected from the group consisting of a Michael addition product of (meth)acrylic acid (b1) and 2-(meth)acryloyl oxyalkyl dicarboxylic monoester (b2).

In the laminate, the softening point of the cured coating of the composition containing urethane (meth)acrylic resin [A] is preferably 20° to 80°C.

In the laminate, the composition containing urethane (meth)acrylic resin [A] is preferably a composition containing alicyclic acrylate (b3).

The present invention also relates to urethane (meth)acrylic resin obtained by reacting a diisocyanate trimer (a1), (meth)acrylate containing a hydroxyl group (a2) and a diol containing a carboxyl group (a3).

The present invention also relates to a composition comprising urethane (meth)acrylic resin [A] obtained by reacting a diisocyanate trimer (a1) and (meth)acrylate containing a hydroxyl group (a2) and a Michael addition product of (meth)acrylic acid (b1) or 2-(meth)acryloyl oxyalkyl dicarboxylic monoester (b2).

Furthermore, the present invention relates to a composition comprising urethane (meth)acrylic resin [A], obtained by reacting a diisocyanate trimer (a1) and (meth)acrylate containing a hydroxyl group (a2), and alicyclic acrylate (b3), in which the softening point of the cured coating is 20° to 80°C.

### BEST MODE FOR CARRYING OUT THE INVENTION

The present invention relates to a process for coating a polyolefin or metal substrate which comprises coating a polyolefin or metal substrate with a composition containing urethane (meth)acrylic resin [A], obtained by reacting a diisocyanate trimer (a1) and (meth)acrylate containing a hydroxyl group (a2), and exposing radiation to cure the coated surface, in which the composition containing urethane (meth)acrylic resin [A] contains a compound having a carboxyl group.

Below, the present invention is described in detail.

The urethane (meth)acrylic resin [A] is described.

The urethane (meth)acrylic resin [A] used in the present invention is prepared by reacting a diisocyanate trimer (a1) and (meth)acrylate containing a hydroxyl group (a2).

The diisocyanate trimer (a1) is described.

The diisocyanate which composes the diisocyanate trimer (a1) is not particularly limited, as long as it is a compound having two isocyanate groups within one molecule. Examples are alicyclic, aromatic and aliphatic diisocyanate. More specifically, examples are alicyclic diisocyanates such as isophorone diisocyanate, norbornene diisocyanate and 1,3-bis(isocyanatomethyl)cyclohexane; aromatic diisocyanates such as tolylene diisocyanate, diphenylmethane diisocyanate, hydrogenated diphenylmethane diisocyanate, modified diphenylmethane diisocyanate, hydrogenated xylylenediisocyanate, xylylenediisocyanate and tetramethyl xylylenediisocyanate; and aliphatic diisocyanates such as hexamethylene diisocyanate and trimethyl hexamethylene diisocyanate. Of these, in view of adhesion, flexibility and film forming properties, isophorone diisocyanate is preferable.

Here, diisocyanate trimer (a1) refers to a compound having two isocyanate groups within one molecule which is isocyanurated by trimeric cyclization reaction.

In the case that the diisocyanate is less than a trimer, film forming properties decrease and when more than a trimer, curing shrinkage when exposing radiation becomes large.

The (meth)acrylate containing a hydroxyl group (a2) is described.

The (meth)acrylate containing a hydroxyl group (a2) is not particularly limited, as long as it is a (meth)acrylate compound which has at least one hydroxyl group in one molecule. Examples are pentaerythritol tri(meth)acrylate, dipentaerythritol penta(meth)acrylate, 2-hydroxyethyl(meth)acrylate, 2-hydroxypropyl(meth)acrylate, 2-hydroxybutyl(meth)acrylate, 2-hydroxyethyl acryloyl phosphate, 4-hydroxybutyl(meth)acrylate, 2-(meth)acryloyloxyethyl-2-hydroxypropyl phthalate, glycerin di(meth)acrylate, 2-hydroxy-3-acryloyloxypropyl(meth)acrylate, caprolactone modified 2-hydroxyethyl(meth)acrylate and cyclohexanedimethanol mono(meth)acrylate. Of these, in view of damage resistance and adhesion with polyolefin, pentaerythritol tri(meth)acrylate and dipentaerythritol penta(meth)acrylate are preferable.

When preparing the urethane (meth)acrylic resin [A] of the present invention, other than the necessary components of (a1) and (a2), a compound containing a plurality of active hydrogen, for example polyol, may be reacted when necessary. Examples are polyols such as ethylene glycol, diethylene glycol, triethylene glycol, tetraethylene glycol, polyethylene glycol, propylene glycol, dipropylene glycol, polypropylene glycol, butylene glycol, 1,3-butanediol, 1,4-butanediol, polybutylene glycol, 3-methyl-1,5-pentanediol, 1,6-hexanediol, neopentyl glycol, 1,9-nonanediol, cyclohexane dimethanol, hydrogenated bisphenol A, polycaprolactonediol, trimethylolethane, polytrimethylolethane, trimethylolpropane, polytrimethylolpropane, pentaerythritol, polypentaerythritol, sorbitol, mannitol, arabitol, xylitol, galactitol, glycerin, polyglycerin, polytetramethylene glycol; polyether polyols such as polyethylene oxide, polypropylene oxide, and a block copolymer or random copolymer of ethylene oxide/propylene oxide; polyester polyols which are condensates of the above polyol or polyether polyol and polybasic acid such as maleic anhydride, maleic acid, fumaric acid, itaconic anhydride, itaconic acid, adipic acid and isophthalic acid; and polyols such as polyols modified with caprolactone including caprolactone modified polytetramethylene polyol, polyolefin polyol and polybutadiene polyol including hydrogenated polybutadiene polyol.

The process for preparing urethane (meth)acrylic resin [A] is described.

The process for preparing the urethane (meth)acrylic resin [A] is not particularly limited but usually, reacting a diisocyanate trimer (a1) and (meth)acrylate containing a hydroxyl group (a2) in a temperature of approximately 50° to 90°C until the remnant isocyanate groups become approximately 0 to 0.5 % by weight is preferable.

In the case that (a2) contains one hydroxyl group, reaction is preferably conducted so that the ratio of the diisocyanate trimer (a1) and the (meth)acrylate containing a hydroxyl group (a2) becomes a reaction mole ratio of 1:3.0 to 1:3.2.

In the reaction, catalysts such as dibutyltin dilaurate, inactive solvents such as ethyl acetate, butyl acetate and toluene or antioxidants may preferably be used for advancing the reaction.

In this way, urethane (meth)acrylic resin [A] is obtained. In the present invention, the glass transition temperature of the urethane (meth)acrylic resin [A] after curing [measured by the TMA (thermomechanical analysis) method] is preferably 20° to 90°C, more preferably 30° to 80°C. When the temperature is less than 20°C, the curing properties are poor and surface tuck tends to remain. When the temperature is more than 90°C, the cured object such as film tends to become brittle.

The composition containing urethane (meth)acrylic resin [A] preferably contains a compound having a carboxyl group.

Examples of the compound having a carboxyl group are diol containing a carboxyl group which is mentioned below, a Michael addition product of (meth)acrylic acid and 2-(meth)acryloyl oxycarboxylic monoester. Of these, in view of improving the film forming properties of the urethane (meth)acrylate, reducing curing shrinkage and improving adhesion with metal, a diol containing a carboxyl group which can be introduced into the urethane (meth)acrylate skeleton is preferable.

The urethane (meth)acrylic resin [A] is preferably prepared by reacting a diisocyanate trimer (a1), (meth)acrylate containing a hydroxyl group (a2) and diol containing a carboxyl group (a3).

The diol containing a carboxyl group (a3) is described.

The diol containing a carboxyl group (a3) is not particularly limited, as long as it is a compound having at least one carboxyl group and two hydroxyl groups within one molecule. Examples are 2,2-bis(hydroxymethyl) butyric acid [dimethylol butanoic acid], 2,2-bis(hydroxymethyl) propionic acid [dimethylol propionic acid], 2,2-bis(hydroxyethyl) propionic acid, 2,2-bis(hydroxypropyl) propionic acid, tartaric acid, dihydroxymethyl acetic acid, bis(4-hydroxyphenyl) acetic acid, 4,4-bis(p-hydroxyphenyl) pentanoic acid, 2,4-hydroxy benzoic acid, 3,5-dihydroxy benzoic acid and homogentisic acid. Preferable examples are 2,2-bis(hydroxymethyl) butyric acid [dimethylol butanoic acid], 2,2-bis(hydroxymethyl) propionic acid [dimethylol propionic acid], 2,2-bis(hydroxyethyl) propionic acid and 2,2-bis(hydroxypropyl) propionic acid. Of these, in view of reactivity with isocyanate, dimethylol butanoic acid and dimethylol propionic acid are preferable.

When preparing urethane (meth)acrylic resin having a carboxyl group, other than the necessary components of (a1) and (a2), other compounds containing a plurality of active hydrogen, such as the above polyol, may be reacted.

The process for preparing urethane (meth)acrylic resin having a carboxyl group is described.

The process for preparing urethane (meth)acrylic resin having a carboxyl group is not particularly limited and usually, a diisocyanate trimer (a1), (meth)acrylate containing a hydroxyl group (a2) and diol containing a carboxyl group (a3) can be added to a reaction vessel all at once or separately and then reacted. Particularly, reacting (meth)acrylate containing a hydroxyl group (a2) with a reaction product, obtained in advance by reacting the diisocyanate trimer (a1) and the diol containing a carboxyl group (a3), is preferable, in view of stability of the reaction and reducing by-products.

In the reaction of the diisocyanate trimer (a1) and the diol containing a carboxyl group (a3), a known reaction method may be used. For example, addition reaction of (a1) and (a3) is conducted in an inactive solvent such as ethyl acetate or methyl ethyl ketone at a temperature of at most the boiling point of the solvent, preferably 60° to 80°C. In the reaction, by adjusting the mole ratio of isocyante groups within the diisocyanate trimer (a1) and the hydroxyl groups within the diol containing a carboxyl group (a3) to approximately 3:1, the isocyanate groups of the reaction product remain and addition reaction with the (meth)acrylate containing a hydroxyl group (a2) becomes possible.

In the addition reaction of the (meth)acrylate containing a hydroxyl group (a2) and the reaction product, a known reaction method may be used. For example, (a2) is added to the reaction product and the reaction is conducted for approximately 3 to 10 hours at 60° to 80°C. In order to advance the reaction, a known catalyst such as dibutyltin dilaurate or an antioxidant is preferably added. The catalyst is preferably used in an amount of approximately 0.01 to 0.1% by weight based on the (meth)acrylate containing a hydroxyl group (a2).

When (a1) is a diisocyanate trimer and (a2) contains 1 hydroxyl group, the reaction mole ratio of the reaction product and (meth)acrylate containing a hydroxyl group (a2) is preferably 1:4.

The addition reaction of (meth)acrylate containing a hydroxyl group (a2) and the reaction product is finished when the content of remnant isocyanate groups within the reaction system becomes approximately 0.1 to 0.5 % by weight, to preferably obtain urethane (meth)acrylic resin having a carboxyl group.

The urethane (meth)acrylic resin having a carboxyl group used in the present invention has an acid number of 10 to 50 mgKOH/g, preferably 13 to 40 mgKOH/g and this acid number range is preferably obtained by selecting the type, proportion contained or condensation degree of (a1), (a2) and (a3). When the acid number is less than 10 mgKOH/g, adhesion to metal tends to become inferior. When the acid number is more than 50 mgKOH/g, compatibility between each material and stability when reacting and stability of the urethane (meth)acrylic resin having a carboxyl group tends to decrease.

The glass transition temperature of the urethane (meth)acrylic resin having a carboxyl group after curing [measured by the TMA (thermomechanical analysis) method] is preferably 20° to 90°C, more preferably 30° to 80°C. When the temperature is less than 20°C, the curing properties are poor and surface tuck tends to remain. When the temperature is more than 90°C, the cured object (such as film) tends to become brittle.

The radiation curable resin composition is described.

In addition to the urethane (meth)acrylic resin [A], the radiation curable resin composition of the present invention preferably contains at least one member selected from the group consisting of a Michael addition product of (meth)acrylic acid (b1) and 2-(meth)acryloyl oxyalkyl dicarboxylic monoester (b2).

The Michael addition product of (meth)acrylic acid (b1) is described.

Examples of the Michael addition product of (meth)acrylic acid (b1) are a dimer of acrylic acid (formula (1) below), a dimer of methacrylic acid, a trimer of acrylic acid (formula (2) below), a trimer of methacrylic acid, a tetramer of acrylic acid (formula (3) below) and a tetramer methacrylic acid. A mixture thereof may also be used. Of these, a dimer of acrylic acid represented by the following formula (1) is preferable from the viewpoint that adhesion to polyolefin is not lost.

CH₂ = CHCOOCH₂CH₂COOH (1)

CH₂ = CH(COOCH₂CH₂)₂COOH (2)

CH₂ = CH(COOCH₂CH₂)₃COOH (3)

The 2-(meth)acryloyl oxyalkyl dicarboxylic monoester (b2) is described.

As the 2-(meth)acryloyl oxyalkyl dicarboxylic monoester (b2), 2-(meth)acryloyl oxyethyl dicarboxylic monoester is preferable. Examples are 2-acryloyl oxyethyl succinic monoester (formula (4) below), 2-methacryloyl oxyethyl succinic monoester, 2-acryloyl oxyethyl phthalic monoester (formula (5) below), 2-methacryloyl oxyethyl phthalic monoester, 2-acryloyl oxyethyl hexahydrophthalic monoester (formula (6) below) and 2-methacryloyl oxyethyl hexahydrophthalic monoester. Of these, in view of adhesion to polyolefin, 2-acryloyl oxyethyl hexahydrophthalic monoester represented by the following formula (6) is preferable.

CH₂ = CHCO-OCH₂CH₂O-COCH₂CH₂COOH (4)

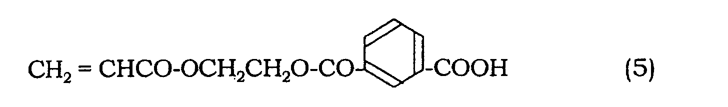

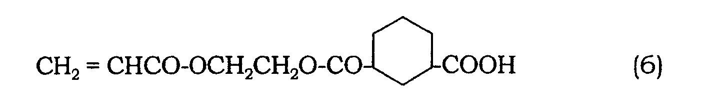

Regarding the content of the urethane (meth)acrylic resin [A], (b1) and/or (b2) in the radiation curable resin composition of the present invention, the content of urethane (meth)acrylic resin [A] is 80 to 99.9 % by weight, more preferably 90 to 99. 5 % by weight and the total of (b1) and/or (b2) is 0.1 to 20 % by weight, more preferably 0.5 to 10 % by weight, based on the total content of the urethane (meth)acrylic resin [A], (b1) and/or (b2). When the total of (b1) and/or (b2) is less than 0.1% by weight, adhesion to metal and glass tends to become poor and when the total is more than 20 % by weight, phase separation tends to occur in the resin composition solution.

Also, when another monomer such as other (meth)acrylate described below is also used, the amount used is preferably 0.1 to 50% by weight, more preferably 1 to 30 % by weight based on the total content weight of the (b1) and/or (b2).

The alicyclic (meth)acrylate (b3) is described.

As the radiation curable resin composition of the present invention, the urethane (meth)acrylic resin [A] may be used alone but in practical use, using the urethane (meth)acrylic resin [A] together with alicyclic (meth)acrylate (b3) is preferable in view of diluting without losing adhesion.

Examples of the alicyclic (meth)acrylate (b3) are dicyclopentenyl (meth)acrylate, tricyclodecanyl (meth)acrylate, cyclopropyl (meth)acrylate, cyclobutyl (meth)acrylate, cyclopentyl (meth)acrylate, cyclohexyl (meth)acrylate, cyclononyl (meth)acrylate, cyclodecyl (meth)acrylate, cyclododecyl (meth)acrylate, cyclostearyl (meth)acrylate, cyclolauryl (meth)acrylate and isobornyl (meth)acrylate. Of these, in view of adhesion to polyolefin, dicyclopentenyl (meth)acrylate and tricyclodecanyl (meth)acrylate are preferable.

When urethane (meth)acrylic resin [A] and alicyclic (meth)acrylate (b3) are used together, the content is 10 to 200 parts by weight of alicyclic (meth)acrylate (b3), more preferably 30 to 100 parts by weight based on 100 parts by weight of the urethane (meth)acrylic resin [A]. When the content of the alicyclic (meth)acrylate (b3) is less than 10 parts by weight, the effect of improving adhesion to polyolefin tends to be poor. Also, when the content exceeds 200 parts by weight, the effect of improving adhesion to polyolefin may not be obtained.

Furthermore, when another monomer also used together, the content weight ratio is preferably 1 to 50 % by weight, more preferably 5 to 30 % by weight based on the alicyclic (meth)acrylate (b3). Also, in order to improve flexibility of the coating, methacrylic resin, epoxy resin or polyester resin may be mixed.

When using the radiation curable resin composition of the present invention as an anchor coating, the softening point of the cured coating is preferably adjusted to be 20° to 80°C, more preferably 25° to 75°C, most preferably 30° to 70°C. When the softening point is lower than 20°C, the top coat layer such as a metal deposition layer tends to become unstable. On the other hand, when the softening point is higher than 80°C, curing shrinkage is large and adhesion is poor and in both cases, the radiation curable resin composition may not function as an anchor coating.

In the present invention, the softening point is the value measured by TMA (thermomechanical analysis). That is, urethane (meth)acrylic resin or a composition comprising urethane (meth)acrylic resin and alicyclic (meth)acrylate is applied on PET. Next, ultraviolet rays are exposed to cure (exposure amount: 450 mJ/cm²) and a cured coating of 50 µm is formed. Then, measurement was conducted under conditions of a load of 100 mN and a measuring temperature of 0° to 100°C (temperature rise 10°C/1 minute), using a Perkin-Elmer TMA7 and the inflection point in the probe penetration curve was considered to be the softening point.

The softening point can suitably be adjusted by selecting the type, reaction ratio or degree of condensation of the reaction material such as (a1) and (a2) when preparing the urethane (meth)acrylic resin [A] or by controlling the type and content of additives such as alicyclic (meth)acrylate (b3) which are used together with the urethane (meth)acrylic resin [A] when preparing the composition.

A large factor in preparing urethane (meth)acrylic resin [A] is the weight average molecular weight of urethane (meth)acrylic resin [A] and the weight average molecular weight is preferably 1,500 to 20,000, more preferably 2,000 to 10,000. When the weight average molecular weight is less than 1,500, the cured coating tends to become brittle. When the weight average molecular weight is more than 20,000, the curing properties tend to become poor.

The above weight average molecular weight is the weight average molecular weight calculated as the standard polystyrene molecular weight. The molecular weight is measured by using a triple series column (Shodex GPC KF-806L, made by Showa Denko K.K. (exclusion limit molecular weight: 2 × 10⁷, separation range: 100 to 2 × 10⁷, theoretical plate number: 10,000 plate/column, filler material: styrene-divinylbenzene copolymer, filler particle size: 10 µm) in a high speed liquid chromatography (Shodex GPC system-model 11, made by Showa Denko K.K.).

In the radiation curable resin composition of the present invention, other than the components of (b1), (b2) and (b3), another (meth)acrylate may also be used when necessary, for example monofunctional (meth)acrylate, difunctional (meth)acrylate or at least trifunctional (meth)acrylate.

Examples of the monofunctional (meth)acrylate are methyl (meth)acrylate, ethyl (meth)acrylate, propyl (meth)acrylate, n-butyl (meth)acrylate, n-stearyl (meth)acrylate, phenoxyethyl (meth)acrylate, glycerin mono(meth)acrylate, glycidyl (meth)acrylate, lauryl (meth)acrylate, cyclohexyl (meth)acrylate, dicyclopentenyl (meth)acrylate, benzyl (meth)acrylate, phenolethylene oxide modified (meth)acrylate (n=2), nonylphenolpropylene oxide modified (meth)acrylate (n=2.5), 2-(meth)acryloyloxyethyl acid phosphate, furfuryl (meth)acrylate, carbitol (meth)acrylate, benzyl (meth)acrylate, butoxyethyl (meth)acrylate, allyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-hydroxy-3-phenoxypropyl (meth)acrylate and 3-chloro-2-hydroxypropyl (meth)acrylate.

Examples of the difunctional (meth)acrylate are ethylene glycol di(meth)acrylate, diethylene glycol di(meth)acrylate, tetraethylene glycol di(meth)acrylate, polyethylene glycol di(meth)acrylate, propylene glycol di(meth)acrylate, dipropylene glycol di(meth)acrylate, polypropylene glycol di(meth)acrylate, butylene glycol di(meth)acrylate, neopentyl glycol di(meth)acrylate, ethylene oxide modified bisphenol A-type di(meth)acrylate, propylene oxide modified bisphenol A-type di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, diglycidyl phthalic ester di(meth)acrylate and hydroxy pivalic acid modified neopentyl glycol di(meth)acrylate.

Examples of the at least trifunctional (meth)acrylate are trimethylol propane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(meth)acryloyloxyethoxy trimethylolpropane and glycerin polyglycidyl ether poly(meth)acrylate.

Next, the process for coating with the radiation curable resin composition is described.

When applying the radiation curable resin composition to the substrate, according to need, the composition may be a solution obtained by dissolving into a solvent such as ethyl acetate, toluene, xylene, methanol, ethanol, butanol, acetone, methyl isobutyl ketone, methyl ethyl ketone, Cellosolves and diacetone alcohol or may be melted by heating the composition. Then, the composition can be applied by the usual applicator, roll coater or bar coater.

The composition is preferably applied to the substrate in a thickness of 1 to 200 µm, more preferably 5 to 100 µm. When the thickness is thinner than 1 µm, radiation curing properties tend to become poor and when the thickness is thicker than 200 µm, curing shrinkage tends to become large.

Here, examples of the substrate are a polyolefin substrate, metal substrate, polycarbonate substrate, ABS substrate, triacetyl cellulose film and polyester film. Of these, a polyolefin substrate and metal substrate are preferable, as the costs of the substrate are low.

Curing by exposing radiation is described below.

The composition containing urethane (meth)acrylic resin [A] of the present invention is cured by exposing radiation. As the above radiation, light rays such as far ultraviolet rays, ultraviolet rays, near ultraviolet rays and infrared rays, electromagnetic waves such as X-rays and γ rays, electron beams, proton beams and neutron beams can be used. Of these, curing by exposing ultraviolet rays is advantageous in view of curing rate, availability of the exposing device and cost.

As the method for curing the composition, 100 to 3000 mJ/cm² of radiation is preferably exposed using a high pressure mercury lamp, metal halide lamp, xenon lamp or chemical lamp radiating light of a wavelength range of 150 to 450 nm. When the radiation is less than 100 mJ/cm², curing properties tend to decrease. When the radiation is more than 3000 mJ/cm², the plastic substrate tends to become disfigured by the heat from the light source.

When ultraviolet rays are exposed for exposing radiation, a photoinitiator is preferably used together. The photoinitiator is not particularly limited as long as radical is generated by function of the light. Examples are 4-phenoxydichloroacetophenone, 4-t-butyl dichloroacetophenone, diethoxyacetophenone, 2-hydroxy-2-methyl-1-phenylpropane-1-one, 1-(4-isopropylenephenyl)-2-hydroxy-2-methylpropane-1-one, 1-(4-dodecylphenyl)-2-hydroxy-2-methylpropane-1-one, 4-(2-hydroxyethoxy)-phenyl(2-hydroxy-2-propyl) ketone, 1-hydroxycyclohexyl phenyl ketone, 2-methyl-1-[4-(methylthio)phenyl]-2-morpholinopropane-1-one, benzoin, benzoin methyl ether, benzoin ethyl ether, benzoin isopropyl ether, benzoin isobutyl ether, benzyl dimethyl ketal, benzophenone, benzoylbenzoic acid, methyl benzoylbenzoate, 4-phenylbenzophenone, hydroxybenzophenone, 4-benzoyl-4'-methyldiphenyl sulfide, 3,3'-dimethyl-4-methoxybenzophenone, thioxanthone, 2-chlorothioxanthone, 2-methylthioxanthone, 2,4-dimethylthioxanthone, isopropylthioxanthone, camphorquinone, dibenzosuberone, 2-ethyl anthraquinone, 4',4"-diethyl isophthalophenone, 3,3',4,4'-tetra(t-butylperoxycarbonyl)benzophenone, α-acyloxime ester, acylhosphine oxide, methylphenyl glyoxylate, benzil, 9,10-phenan threnequinone and 4-(2-hydroxyethoxy)phenyl-(2-hydroxy-2-propyl)ketone. Of these, benzyl dimethyl ketal, 1-hydroxycyclohexyl phenyl ketone, benzoin isopropyl ether, 4-(2-hydroxyethoxy)-phenyl(2-hydroxy-2-propyl) ketone and 2-hydroxy-2-methyl-1-phenylpropane-1-one are preferable.

The content of the photoinitiator is preferably 0.05 to 15% by weight, more preferably 0.5 to 10 % by weight, based on the total of urethane (meth)acrylic resin [A], (b1), (b2) and (b3). When the content of the photoinitiator is less than 0.05 % by weight, the curing rate of curing with ultraviolet rays tends to become extremely slow. When the content is more than 15 % by weight, the curing properties do not improve and the photoinitiator tends to be wasted.

Also, as an auxiliary of the photoinitiator, triethanolamine, triisopropanolamine, 4,4'-dimethylaminobenzophenone (Michler's ketone), 4,4'-diethylaminobenzophenone, 2-dimethylaminoethyl benzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone or 2,4-diisopropylthioxanthone may be used together.

When used as a coating or an adhesive, the radiation curable resin composition of the present invention may contain an antioxidant, flame retardant, antistatic agent, filler, leveling agent, stabilizer, reinforcing agent, delusterant, grinding agent or pigment.

Furthermore, a diluent may be contained as well. Examples of the diluent are ethyl acetate, butyl acetate, toluene, xylene, methanol, ethanol, butanol, acetone, methyl isobutyl ketone, methyl ethyl ketone, Cellosolves and diacetone alcohol.

The radiation curable resin composition of the present invention has superior adhesion properties to polyolefin resin such as polyethylene and polypropylene, molded articles thereof (e.g. films, sheets, cups) and nonpolar substances such as metal and glass. Furthermore, as transparency is excellent, the composition can be effectively used as paint, a coating or an adhesive, particularly as paint and a coating.

When the urethane (meth)acrylic resin [A] is urethane (meth)acrylic resin containing a carboxyl group, by neutralizing the carboxyl group with alkali such as ammonia water, sodium hydroxide, potassium hydroxide, sodium carbonate and potassium carbonate, the composition can be used as a water-soluble coating.

Below, the laminate having a layer structure of a top coat layer, a layer of a composition containing urethane (meth)acrylic resin [A] obtained by reacting a diisocyanate trimer (a1) and (meth)acrylate containing a hydroxyl group (a2), and a polyolefin layer is described below.

When using the above composition as an anchor coating composition for the substrate, the composition is applied to the substrate, an anchor coat layer is formed by curing and the top coat layer is formed on the anchor coat layer to obtain the laminate.

As the film thickness of the anchor coat layer, 1 to 40 µm, more preferably 2 to 20 µm, is practical. When the thickness is thinner than 1 µm, curing properties tend to become poor. When the thickness is thicker than 40 µm, curing shrinkage tends to become large.

As the above polyolefin, polyethylene, polypropylene and polycycloolefin are preferable as costs of the substrate are low and transparency is high.

As the top coat layer, at least one type of layer selected from the group consisting of a metal deposition layer, a layer of urethane (meth)acrylate resin other than the urethane (meth)acrylate resin [A], a layer of epoxy (meth)acrylate resin, a layer of polyester (meth)acrylate resin and a layer of (meth)acrylate resin.

The top coat layer is described below.

The metal deposition layer is formed by a known method such as physical deposition of metal and/or metal oxide, sputtering and chemical deposition. Examples of the metal and/or metal oxide which forms the layer are metal such as boron, magnesium, aluminum, silicon, phosphorous, titanium, chromium, manganese, iron, cobalt, nickel, copper, zinc, gallium, germanium, arsenic, selenium, zirconium, palladium, silver, cadmium, indium, tin, antimony, tellurium, platinum, gold, lead and bismuth and oxides thereof. One kind or a mixture of at least two kinds may be used.

Of these, aluminum, alumina, silicon oxides, a mixture of silicon oxides and alumina and a mixture of silicon oxides and boron oxides are preferable, in view of low cost and common use as metal deposition.

The film thickness of the deposition layer is preferably approximately 200 to 1000 angstroms. When the layer is thinner than 200 angstroms, metal luster tends to be lost and when the layer is thicker than 1000 angstroms, adhesion with the top coat and bottom coat tends to become poor.

Examples of the radiation curable top coat are a layer of urethane (meth)acrylate resin other than the urethane (meth)acrylate resin [A], a layer of epoxy (meth)acrylate resin, a layer of polyester (meth)acrylate resin and a layer of (meth)acrylate resin.

The film thickness of the radiation curable top coat is preferably 1 to 20 µm. When the layer is thinner than 1 µm, curing and adhesion tend to be poor. When the layer is thicker than 20 µm, curing shrinkage is large and poor adhesion and disfiguration of the substrate tend to be caused.

A layer of urethane (meth)acrylate resin other than the urethane (meth)acrylate resin [A] can be obtained by adding a polyvalent isocyanate compound to polyol (e.g. polyester polyol and polyether polyol) to form a terminal isocyanate group and then reacting with (meth)acrylate containing a hydroxyl group. Examples of the polyvalent isocyanate compound are tolylene diisocyanate (TDI), 4,4'-diphenylmethane diisocyanate (MDI), hydrogenated MDI, crude MDI, modified MDI, 1,3-bis(isocyanatemethyl)cyclohexane (XDI), hydrogenated XDI, hexamethylene diisocyanate (HMDI), tetraxylylene diisocyanate (TMXDI), isophorone diisocyanate (IPDI) and norbornene diisocyanate (NBDI). Examples of the (meth)acrylate containing a hydroxyl group are 2-hydroxyethyl acrylate, 2-hydroxyethyl methacrylate, 2-hydroxypropyl acrylate, 2-hydroxypropyl methacrylate, pentaerythritol triacrylate, 2-hydroxyethylacryloyl phosphate, 4-hydroxybutyl acrylate and caprolactone modified 2-hydroxyethyl acrylate. When using as a top coat, the weight average molecular weight is preferably approximately 1500 to 10000 and the softening point of the cured coating is preferably at least 50°C.

A layer of epoxy (meth)acrylate resin is obtained by reacting a compound containing an epoxy group (glycidyl group) (e.g. bisphenol A diglycidyl ether, trimethylol propane triglycidyl ether, glycerin triglycidyl ether) with (meth)acrylic acid.

A layer of polyester (meth)acrylate resin is obtained by reacting a polyester compound containing a terminal carboxyl group with the (meth)acrylate containing a hydroxyl group or by reacting a polyester compound containing a terminal hydroxyl group with acrylic acid.

The radiation curable coating for the top coat is usually used in a solvent-less system but an organic solvent may be added when necessary. Examples of the organic solvent are ketone solvents such as acetone, methyl ethyl ketone and cyclohexanone, ester solvents such as methyl acetate, ethyl acetate, butyl acetate, ethyl lactate, methoxyethyl acetate, propylene glycol monomethyl ether acetate and ethylene glycol diacetate, ether solvents such as diethyl ether, ethylene glycol dimethyl ether and dioxane, aromatic solvents such as toluene and xylene, aliphatic solvents such as pentane and hexane, halogen solvents such as methylene chloride, chlorobenzene, chloroform and alcohol solvents such as isopropyl alcohol and butanol.

Also, photoinitiators and other additives may be used and particularly those described for the radiation curable resin composition may be used. As the method for applying and the method for curing by exposing radiation, the methods described for the radiation curable resin composition may be employed.

Furthermore, the layer of (meth)acrylate resin has an alkyl (meth)acrylate monomer as the main component and generally, preferably comprises an acrylic resin containing a carboxyl group obtained by copolymerizing the above monomer with an unsaturated monomer containing a carboxyl group.

Examples of the an alkyl (meth)acrylate monomer are methyl acrylate, ethyl acrylate, n-propyl acrylate, iso-propyl acrylate, n-butyl acrylate, iso-butyl acrylate, tert-butyl acrylate, n-hexyl acrylate, 2-ethylhexyl acrylate, n-octyl acrylate, lauryl acrylate, methyl methacrylate, ethyl methacrylate, n-propyl methacrylate, iso-propyl methacrylate, n-butyl methacrylate, iso-butyl methacrylate, tert-butyl methacrylate, n-hexyl methacrylate, 2-ethylhexyl methacrylate, n-hexyl methacrylate, n-octyl methacrylate and lauryl methacrylate. Preferably, methyl acrylate, ethyl acrylate, n-butyl acrylate, 2-ethylhexyl acrylate, methyl methacrylate, 2-ethylhexyl methacrylate and iso-propyl methacrylate are used.

Examples of the unsaturated monomer containing a carboxyl group are acrylic acid, methacrylic acid, maleic acid, maleic anhydride, fumaric acid, itaconic acid, crotonic acid, aconitic acid, cinnamic acid, monoalkyl maleate, monoalkyl fumarate, monoalkyl itaconate, citraconic anhydride and citraconic acid. Preferably, acrylic acid, methacrylic acid, maleic acid and maleic anhydride are used. The copolymerization ratio of the unsaturated monomer containing a carboxyl group is preferably 0.2 to 5 % by weight, more preferably 0.5 to 3 % by weight based on the total weight of monomers.

As the copolymer component, besides the unsaturated monomer containing a carboxyl group, other copolymerizable monomers can also be used together. Examples of the monomers are an unsaturated monomer containing a hydroxyl group such as 2-hydroxyethyl acrylate, 2-hydroxypropyl acrylate, 3-chloro-2-hydroxypropyl acrylate, 2-hydroxyethyl methacrylate, 2-hydroxypropyl methacrylate, 3-chloro-2-hydroxypropyl methacrylate, tetrahydrofurfuryl acrylate, 2-hydroxy-3-phenoxypropyl acrylate, N-methylolacrylamide and N-methylolmethacrylamide, an unsaturated monomer containing a glycidyl group such as glycidyl methacrylate and allylglycidyl methacrylate, acrylamide, methacrylamide, N-acrylamide methyl trimethyl ammonium chloride, allyltrimethylammonium chloride, dimethylallyl vinyl ketone, N-vinylpyrrolidone, vinyl propionate, vinyl stearate, vinyl chloride, vinylidene chloride, vinyl acetate and styrene. Preferably, 2-hydroxyethyl acrylate, 2-hydroxypropyl acrylate, 2-hydroxypropyl methacrylate, N-methylol acrylamide, glycidyl methacrylate, vinyl acetate and styrene are used.

The thickness of the coating of the (meth)acrylic resin is preferably 1 to 20 µm. When the coating is thinner than 1 µm, obtaining a smooth surface coating on an uneven substrate tends to be difficult. When the coating is thicker than 20 µm, the curing time becomes long and costs tend to increase.

The (meth)acrylic resin is usually used in an organic solvent. Examples of the organic solvent are ketone solvents such as acetone, methyl ethyl ketone and cyclohexanone, ester solvents such as methyl acetate, ethyl acetate, butyl acetate, ethyl lactate, methoxyethyl acetate, propylene glycol monomethyl ether acetate and ethylene glycol diacetate, ether solvents such as diethyl ether, ethylene glycol dimethyl ether and dioxane, aromatic solvents such as toluene and xylene, aliphatic solvents such as pentane and hexane, halogen solvents such as methylene chloride, chlorobenzene, chloroform and alcohol solvents such as isopropyl alcohol and butanol.

In the top coat, the layer of urethane (meth)acrylate resin other than the urethane (meth)acrylate resin [A], the layer of epoxy (meth)acrylate resin, the layer of polyester (meth)acrylate resin and the layer of (meth)acrylate resin may also contain thermoplastic resin. Examples of the thermoplastic resin are cellulose acetate butyrate, nitro cellulose, vinyl chloride resin, vinyl acetate resin, acrylic resin, a copolymer thereof, butylated melamine and butylated urea.

Also, wax-type unsaturated polyester resin may also be used together.

Hereinafter, the present invention is explained in detail by means of Examples.

In Examples, "%" and "parts" represent weight standards unless otherwise indicated.

Each of the urethane (meth)acrylic resin [A-1] to [A-3] were prepared in the following manner.

### Urethane (meth)acrylic resin [A-1]

A four-neck flask equipped with a thermometer, stirrer, water-cooled condenser and air inlet was charged with 43 parts (0.064 mole) of a trimer of isophorone diisocyanate, which was dissolved by heating to 70°C. Then, after introducing air into the liquid, 57 parts (0.19 mole) of pentaerythritol triacrylate, 0.05 part of methyl ethyl hydroquinone and 0.01 part of dibutyltin dilaurate was added. Reaction was conducted for 5 hours at a constant temperature and finished when the remnant isocyanate group became 0.3 % to obtain urethane (meth)acrylic resin [A-1].

### Urethane (meth)acrylic resin [A-2]

The experiment was conducted in the same manner as in A-1 except that 38.7 parts (0.069 mole) of a trimer of hexamethylene diisocyanate and 61.3 parts (0.206 mole) of pentaerythritol triacrylate were used instead of 43 parts (0.064 mole) of a trimer of isophorone diisocyanate and 57 parts (0.19 mole) of pentaerythritol triacrylate to obtain urethane (meth)acrylic resin [A-2].

### Urethane (meth)acrylic resin [A-3]

The experiment was conducted in the same manner as in A-1 except that 29.8 parts (0.043 mole) of a trimer of isophorone diisocyanate and 70.2 parts (0.13 mole) of dipentaerythritol pentaacrylate were used instead of 43 parts (0.064 mole) of a trimer of isophorone diisocyanate and 57 parts (0.19 mole) of pentaerythritol triacrylate to obtain urethane (meth)acrylic resin [A-3].

The following were used as (b1) and (b2).
(b1-1) dimer of acrylic acid
(b1-2) trimer of acrylic acid
(b2-1) 2-acryloyloxyethyl hexahydro phthalic acid monoester
(b2-2) 2-acryloyloxyethyl phthalic acid monoester

### EXAMPLES 1 to 9 and COMPARATIVE EXAMPLES 1 to 3

Urethane (meth)acrylic resin [A] and (b1) or (b2) were mixed in the amounts shown in Table 1. 3 parts of 1-hydroxy-cyclohexyl-phenyl-ketone (Irgacure 184, available from Ciba Specialty Chemicals Co., Ltd.) as a photoinitiator and 182 parts of ethyl acetate were further added to obtain an ultraviolet curable resin composition. Regarding the obtained composition, the following evaluation was conducted. The evaluation results are shown in Table 2.

### (Cross cut adhesion test)

The test composition was applied in a thickness of 10 µm to the surface of each substrate of a polypropylene plate, aluminum plate and copper plate (all having a size of 1.0 mm (thickness) × 70 mm × 150 mm, available from Nippon Testpanel Co., Ltd.) using a #20 bar coater. The composition was then cured by exposing ultraviolet rays (exposure amount: 500 mJ/cm²) with a 120 W desktop UV exposure device (conveyer type desktop exposure device, made by Iwasaki Electric Co., Ltd.) under conditions of 20 cmH × 5 m/minute × 2 pass. The cross cut adhesion test was conducted according to JIS K5400 and the measured results were represented in a fraction, as the number of unpeeled cross cuts/the total number of cross cuts.

The larger the fraction is, the better the adhesion.

**TABLE 1**

| | [A] | | (b1) or (b2) | |
|---|---|---|---|---|
| | Type | Content (parts by weight as solid content) | Type | Content (parts by weight as solid content) |
| Ex. 1 | A-1 | 95 | b1-1 | 5 |
| Ex.2 | A-2 | 95 | b1-1 | 5 |
| Ex.3 | A-3 | 95 | b1-1 | 5 |
| Ex.4 | A-1 | 95 | b1-2 | 5 |
| Ex. 5 | A-2 | 95 | b2-1 | 5 |
| Ex. 6 | A-1 | 95 | b2-1 | 5 |
| Ex. 7 | A-1 | 95 | b2-2 | 5 |
| Ex.8 | A-1 | 90 | b1-1 | 10 |
| Ex.9 | A-1 | 97 | b1-1 | 3 |
| Com. Ex. 1 | A-1 | 100 | - | 0 |
| Com. Ex. 2 | A-2 | 100 | - | 0 |
| Com. Ex. 3 | A-3 | 100 | - | 0 |

**TABLE 2**

| Cross Cut Adhesion Test | | | |
|---|---|---|---|
| | Polypropylene Plate | Aluminum Plate | Copper Plate |
| Ex. 1 | 100/100 | 100/100 | 100/100 |
| Ex.2 | 90/100 | 90/100 | 85/100 |
| Ex.3 | 100/100 | 100/100 | 100/100 |
| Ex.4 | 100/100 | 100/100 | 100/100 |
| Ex.5 | 90/100 | 80/100 | 80/100 |
| Ex.6 | 100/100 | 95/100 | 95/100 |
| Ex.7 | 100/100 | 95/100 | 95/100 |
| Ex. 8 | 100/100 | 100/100 | 100/100 |
| Ex.9 | 100/100 | 90/100 | 90/100 |
| Com. Ex. 1 | 100/100 | 20/100 | 10/100 |
| Com. Ex. 2 | 80/100 | 10/100 | 10/100 |
| Com. Ex. 3 | 100/100 | 20/100 | 10/100 |

### EXAMPLE 10

A four-neck flask equipped with a thermometer, stirrer, water-cooled condenser and air inlet was charged with 50 parts (0.075 mole) of a trimer of isophorone diisocyanate, 5.5 parts of (0.037 mole) of dimethylol butanoic acid and 50 parts of ethyl acetate. The mixture was heated to 80°C and addition reaction was conducted for 2 hours. Then, after introducing air into the reaction solution, 44.5 parts (0.15 mole) of pentaerythritol triacrylate, 0.05 part of methyl ethyl hydroquinone and 0.01 part of dibutyltin dilaurate was added. Reaction was conducted for 5 hours at a constant temperature and finished when the remnant isocyanate group became 0.3 % to obtain urethane (meth)acrylic resin containing a carboxyl group [A-4].

3 parts of 1-hydroxy-cyclohexyl-phenyl-ketone (Irgacure 184, available from Ciba Specialty Chemicals Co., Ltd.) as a photoinitiator and 182 parts of ethyl acetate were added to 100 parts of the urethane (meth)acrylic resin containing a carboxyl group [A-4] to obtain a ultraviolet curable resin composition. Regarding the obtained composition, evaluation by the cross cut adhesion test was conducted. The evaluation results are shown in Table 3.

### EXAMPLE 11

Urethane (meth)acrylic resin containing a carboxyl group [A-5] was obtained in the same manner as in Example 10 except that 37.4 parts (0.17 mole) of isophorone diisocyanate, 12.5 parts of (0.085 mole) of dimethylol butanoic acid and 50.1 parts (0.17 mole) of pentaerythritol triacrylate were used instead of 50 parts (0.075 mole) of a trimer of isophorone diisocyanate, 5.5 parts of (0.037 mole) of dimethylol butanoic acid and 44.5 parts (0.15 mole) of pentaerythritol triacrylate of Example 10. Then, an ultraviolet curable resin composition was obtained and evaluated in the same manner as in Example 10. The evaluation results are shown in Table 3.

### EXAMPLE 12

Urethane (meth)acrylic resin containing a carboxyl group [A-6] was obtained in the same manner as in Example 10 except that 50.1 parts (0.075 mole) of a trimer of isophorone diisocyanate, 5.0 parts (0.037 mole) of dimethylol propionic acid and 44.9 parts (0.15 mole) of pentaerythritol triacrylate were used instead of 50 parts (0.075 mole) of a trimer of isophorone diisocyanate, 5.5 parts of (0.037 mole) of dimethylol butanoic acid and 44.5 parts (0.15 mole) of pentaerythritol triacrylate of Example 10. Then, an ultraviolet curable resin composition was obtained and evaluated in the same manner as in Example 10. The evaluation results are shown in Table 3.

### EXAMPLES 13 to 15

An ultraviolet curable resin composition was obtained in the same manner as in Example 1 except that instead of 100 parts of the urethane (meth)acrylic resin containing a carboxyl group [A-4] of Example 10, a composition containing 95 parts of the urethane (meth)acrylic resin containing a carboxyl group [A-4] of Example 10 and 5 parts of an acrylic acid dimer as the ethylene unsaturated compound (Example 13), a composition containing 90 parts of the urethane (meth)acrylic resin containing a carboxyl group [A-5] of Example 11 and 10 parts of pentaerythritol triacrylate as the ethylene unsaturated compound (Example 14) and a composition containing 95 parts of the urethane (meth)acrylic resin containing a carboxyl group [A-6] of Example 12 and 5 parts of an acrylic acid dimer as the ethylene unsaturated compound (Example 15) were used respectively. Evaluation was conducted in the same manner as in Example 10 and the results thereof are shown in Table 3.

### COMPARATIVE EXAMPLES 4 and 5

An ultraviolet curable resin composition was obtained in the same manner as in Example 10 except that the use of dimethylol butanoic acid was omitted in Example 1 (Comparative Example 1) and neopentyl glycol was used instead of dimethylol butanoic acid (Comparative Example 2). Evaluation was conducted in the same manner as in Example 10 and the results thereof are shown in Table 3.

**TABLE 3**

| | Polypropylene Plate | Aluminum Plate | Copper Plate |
|---|---|---|---|
| Ex.10 | 100/100 | 100/100 | 100/100 |
| Ex. 11 | 100/100 | 100/100 | 100/100 |
| Ex. 12 | 100/100 | 100/100 | 100/100 |
| Ex.13 | 100/100 | 100/100 | 100/100 |
| Ex.14 | 95/100 | 90/100 | 90/100 |
| Ex.15 | 100/100 | 100/100 | 100/100 |
| Com. Ex. 4 | 100/100 | 20/100 | 10/100 |
| Com. Ex. 5 | 80/100 | 0/100 | 0/100 |

Each of the urethane (meth)acrylic resin [A-7] to [A-11] were prepared in the following manner.

### Urethane (meth)acrylic resin [A-7]

A four-neck flask equipped with a thermometer, stirrer, water-cooled condenser and air inlet was charged with 133.5 parts (0.18 mole) of a trimer of isophorone diisocyanate, which was dissolved by heating to 80°C. Then, after introducing air into the liquid, 249.3 parts (0.56 mole) of pentaerythritol triacrylate, 0.38 part of methyl ethyl hydroquinone and 0.38 part of dibutyltin dilaurate was added. Reaction was conducted for 5 hours at a constant temperature and finished when the remnant isocyanate group became 0.3 %. After the reaction was finished, 688.9 parts of ethyl acetate was added and urethane (meth)acrylic resin [A-7] (glass transition temperature 68°C, weight average molecular weight 4500) having a solid content concentration of 35 % was obtained.

### Urethane (meth)acrylic resin [A-8]

The experiment was conducted in the same manner as in [A-7] except that 100 parts (0.17 mole) of a trimer of hexamethylene diisocyanate was used instead of 133.5 parts (0.18 mole) of a trimer of isophorone diisocyanate of [A-7] and urethane (meth)acrylic resin [A-8] (glass transition temperature 70°C, weight average molecular weight 5700) was obtained.

### Urethane (meth)acrylic resin [A-9]

The experiment was conducted in the same manner as in [A-7] except that 302.4 parts (0.56 mole) of dipentaerythritol pentaacrylate was used instead of 249.3 parts (0.56 mole) of pentaerythritol triacrylate of [A-7] and urethane (meth)acrylic resin [A-9] (glass transition temperature 70°C, weight average molecular weight 6000) was obtained.

### Urethane (meth)acrylic resin [A-10]

The experiment was conducted in the same manner as in [A-7] except that 166 parts (0.75 mole) of isophorone diisocyanate was used instead of 133.5 parts (0.18 mole) of a trimer of isophorone diisocyanate of [A-7] and urethane (meth)acrylic resin [A-10] (glass transition temperature 65°C, weight average molecular weight 1870) was obtained.

### Urethane (meth)acrylic resin [A-11]

A four-neck flask equipped with a thermometer, stirrer, water-cooled condenser and nitrogen gas inlet was charged with 66.6 g (0.3 mole) of isophorone diisocyanate, 400 g (0.2 mole) of polyol having a weight average molecular weight of 2000 (condensate of ethylene glycol/1,4-butanediol/adipic acid (Adeka Newace V14-90, available from Asahi Denka Co., Ltd.) and 74.3 g of ethyl acetate. The mixture was reacted at 75°C in a nitrogen atmosphere and when the remnant isocyanate group became 2.5 %, the temperature was lowered to 60°C. Then, 23.2 g (0.2 mole) of 2-hydroxyethyl acrylate was added and reaction was conducted. The reaction was finished when the remnant isocyanate group became 0.3 % to obtain urethane (meth)acrylic resin [A-11] (weight average molecular weight 20,000).

The following were used as alicyclic (meth)acrylate (b3).
(b3-1 ) dicyclopentenyl acrylate
(b3-2) tricyclodecanyl acrylate

Furthermore, the following compounds were prepared as other compounding agents.
[C-1] pentaerythritol triacrylate
[C-2] dimer of acrylic acid
[D-1] methacrylic resin (methyl methacrylate/i-butyl methacrylate/dicyclopentanyl methacrylate = 60/20/20 [weight ratio] copolymer, weight average molecular weight = 50,000)
[D-2] methacrylic resin (methyl methacrylate/n-butyl methacrylate/isobornyl methacrylate = 60/20/20 [weight ratio] copolymer, weight average molecular weight = 50,000)

### EXAMPLES 16 to 18 and COMPARATIVE EXAMPLES 6 and 7

Urethane (meth)acrylic resin [A-7] to [A-11], (b3), [C] and [D] were mixed in the amounts (all represented as solid content) shown in Table 4. Then, 4 parts of a photoinitiator (Irgacure 184, available from Ciba Specialty Chemicals Co., Ltd.) were added based on 100 parts of the total of [A] and [B] to obtain an ultraviolet curable anchor coating composition.

The softening point of the cured coating of the anchor coating composition comprising [A] and (b3) are shown in Table 4.

Next, the obtained ultraviolet curable anchor coating composition applied in a thickness of 10 µm to a polypropylene plate available from Nippon Testpanel Co., Ltd. using a #20 bar coater. After drying for 2 minutes at 80°C, the composition was cured by exposing ultraviolet rays (exposure amount: 450 mJ/cm²) with a 120 W desktop UV exposure device (conveyer type desktop exposure device, made by Iwasaki Electric Co., Ltd.) under conditions of 20 cmH × 5 m/minute × 2 pass and an anchor coat layer (cured coating) of a film thickness of 5 µm was formed.

Then, on the anchor coat layer, an aluminum deposition layer of a film thickness of 500 Angstroms was formed by vacuum deposition and metal deposition polypropylene plate was obtained.

The adhesion of the obtained metal deposition polypropylene plate (cross cut adhesion test) was measured according to JIS K5400 and the measured results were represented in a fraction as the number of unpeeled cross cuts/ the total number of cross cuts. The larger the fraction is, the better the adhesion.

The evaluation results are shown in Table 5.

### EXAMPLES 19 to 22

A top coated polypropylene board was obtained in the same manner as in Examples 16 to 18 except that instead of the aluminum deposition layer which is the top coating, a urethane acrylate resin layer (Example 19), epoxy acrylate resin layer (Example 20), polyester acrylate resin layer (Example 21) and acrylic resin layer (Example 22) were formed and the content of [A], (b3), [C] and [D] were shown in Table 4. The urethane acrylate resin layer was 10 µm, the epoxy acrylate resin layer was 5 µm, the polyester acrylate resin layer was 5 µm and the acrylic resin layer was 15 µm.

The evaluation results are shown in Table 5.

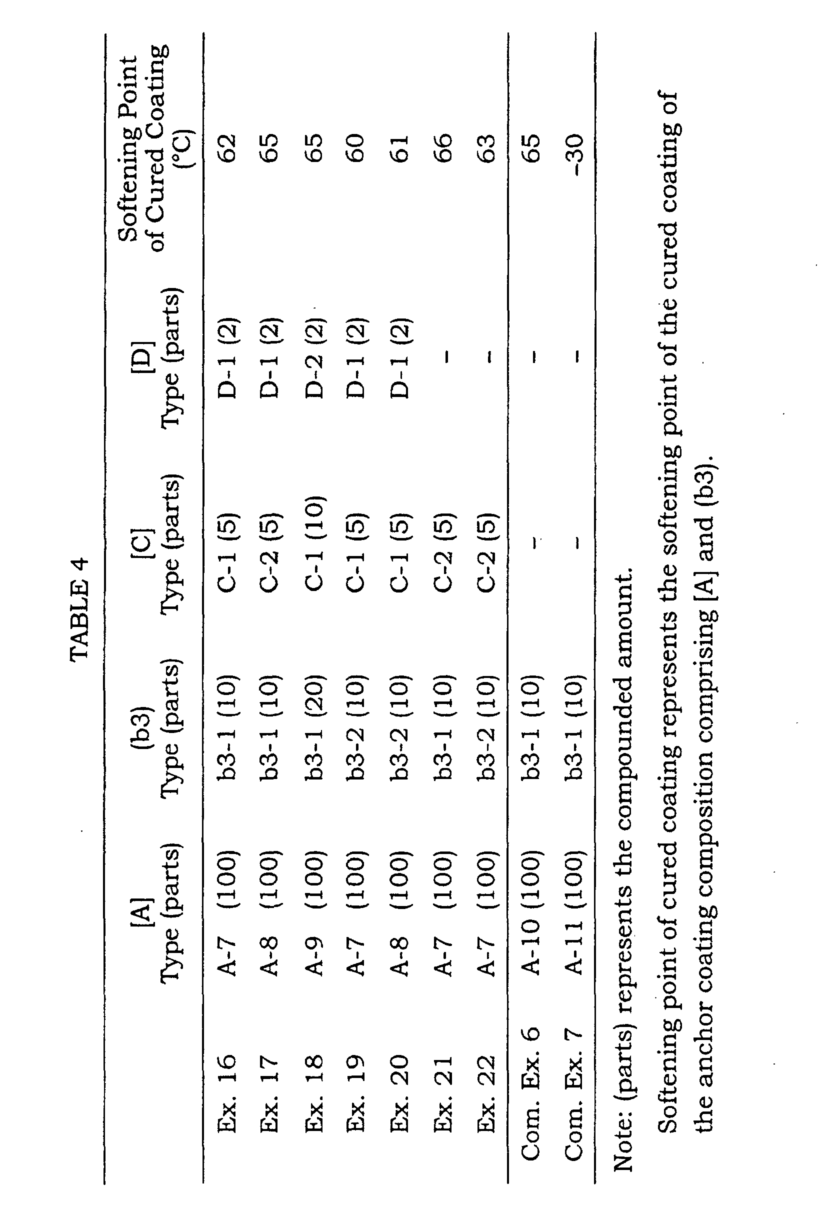

**TABLE 5**

| Cross Cut Adhesion Test | |
|---|---|
| Ex. 16 | 100/100 |
| Ex. 17 | 100/100 |
| Ex. 18 | 95/100 |
| Ex. 19 | 100/100 |
| Ex. 20 | 95/100 |
| Ex. 21 | 100/100 |
| Ex. 22 | 100/100 |
| Com. Ex. 6 | 0/100 |
| Com. Ex. 7 | 0/100 |

### INDUSTRIAL APPLICABILITY

The radiation curable resin composition having urethane (meth)acrylic resin [A] as the main component of the present invention has good adhesion to nonpolar plastic material such as polyolefin, metal and glass. Also, the radiation curable resin composition of the present invention is extremely useful as a base coating in the field of metalizing treatment, in which metal deposition to a polyolefin molded article is conducted, which is increasingly used in the market in recent years. Furthermore, the utility value of the radiation curable resin composition of the present invention in the field of top coating to other synthetic resin is extremely large.

## Claims

1. A process for coating a polyolefin or metal substrate which comprises:
coating a polyolefin or metal substrate with a composition containing urethane (meth)acrylic resin [A] obtained by reacting a diisocyanate trimer (a1) and (meth)acrylate containing a hydroxyl group (a2); and exposing radiation to cure the coated surface;
wherein said composition containing urethane (meth)acrylic resin [A] contains a compound having a carboxyl group.

2. The process of Claim 1, wherein said urethane (meth)acrylic resin [A] has a carboxyl group.

3. The process of Claim 2, wherein said urethane (meth)acrylic resin [A] is urethane (meth)acrylic resin containing a carboxyl group obtained by reacting a diisocyanate trimer (a1), an acrylate containing a hydroxyl group (a2) and a diol containing a carboxyl group (a3).

4. The process of Claim 1, wherein said compound having a carboxyl group is at least one member selected from the group consisting of a Michael addition product of (meth)acrylic acid (b1) and 2-(meth)acryloyl oxyalkyl dicarboxylic monoester (b2).

5. The process of Claim 1, wherein the softening point of cured coating of said composition containing urethane (meth)acrylic resin [A] is 20° to 80°C.

6. The process of Claim 5, wherein said composition containing urethane (meth)acrylic resin [A] is a composition containing alicyclic acrylate (b3).

7. A laminate having a layer structure of a top coat layer, a layer of a composition containing urethane (meth)acrylic resin [A] obtained by reacting a diisocyanate trimer (a1) and (meth)acrylate containing a hydroxyl group (a2), and a polyolefin layer.

8. The laminate of Claim 7, wherein said composition containing urethane (meth)acrylic resin [A] contains a compound having a carboxyl group.

9. The laminate of Claim 8, wherein said urethane (meth)acrylic resin [A] has a carboxyl group.

10. The laminate of Claim 9, wherein said urethane (meth)acrylic resin [A] is urethane (meth)acrylic resin containing a carboxyl group obtained by reacting a diisocyanate trimer (a1), (meth)acrylate containing a hydroxyl group (a2) and a diol containing a carboxyl group (a3).

11. The laminate of Claim 8, wherein said compound having a carboxyl group is at least one member selected from the group consisting of a Michael addition product of (meth)acrylic acid (b1) and 2-(meth)acryloyl oxyalkyl dicarboxylic monoester (b2).

12. The laminate of Claim 8, wherein the softening point of cured coating of said composition containing urethane (meth)acrylic resin [A] is 20° to 80°C.

13. The laminate of Claim 12, wherein said composition containing urethane (meth)acrylic resin [A] is a composition containing alicyclic acrylate (b3).

14. An urethane (meth)acrylic resin obtained by reacting a diisocyanate trimer (a1), (meth)acrylate containing a hydroxyl group (a2) and a diol containing a carboxyl group (a3).

15. A composition comprising urethane (meth)acrylic resin [A], obtained by reacting a diisocyanate trimer (a1) and (meth)acrylate containing a hydroxyl group (a2), and a Michael addition product of (meth)acrylic acid (b1) or 2-(meth)acryloyl oxyalkyl dicarboxylic monoester (b2).

16. A composition comprising urethane (meth)acrylic resin [A], obtained by reacting a diisocyanate trimer (a1) and (meth)acrylate containing a hydroxyl group (a2), and alicyclic acrylate (b3),
wherein the softening point of cured coating is 20° to 80°C.
